# EUROPEAN PATENT APPLICATION

(11) **EP 2 696 315 A1**
(43) Date of publication of application: **12.02.2014**
(21) Application number: 12179881.3
(22) Date of filing: 09.08.2012
(51) Int. Cl.: G06Q 10/10

(54) **Simultaneous evaluation of items via online services**

(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A method for simultaneous evaluation of items via online services and an online system host-ing an online service therefore are described. The method comprises the steps of initiating an evaluation activity for a group of users of the online service, said evaluation activity directed at a plurality of items, establishing a communication channel connecting the users of the group with each other, said communication channel being coupled to the evaluation activity, providing to each user of the group a representation of the evaluation activity customized for the user and one or more further representations of the evaluation activity, each customized for another user of the group, detecting an interaction of a user of the group with a representation provided to the user, updating the representations in response to the interaction, and simultaneously providing updates of the representations to at least some of the users of the group.

## Description

### TECHNICAL FIELD

The present disclosure relates to a method for simultaneous evaluation of items via an online services and, in particular, to a system hosting an online service enabling a simultaneous evaluation of items.

### BACKGROUND

Online shopping platforms typically enable single users to browse a catalogue of purchasable items and to review comments on particular items, which have been previously submitted by other users of the shopping platform. After purchase of an item, the user may, as well, provide own comments with regard to purchased items. Yet, since users of shopping platforms are not interrelated or connected online, the user is neither aware of the identity of other users submitting comments, nor has any control of the recipients of the own comment.

Social networks typically provide a platform for a plurality of users to interconnect with each other and to browse online content. Yet, online interaction between users of a social network is focused on providing online content to particular users or groups of users.

Hence, neither online shopping platforms nor social networks provide a functionality which enables a group of users to jointly evaluate items online, thereby providing an online experience that corresponds to a real world experience, for example, an online shopping experience which is similar to shopping with friends in real shops.

In view of the above, one object is to provide an online evaluation experience which enables a joint participation of users.

### SUMMARY

The problem is solved by a method for simultaneous evaluation of items via an online service and an online system hosting an online service as defined in the independent claims. Furthermore, a computer-readable medium is defined. Preferred embodiments are defined in the corresponding dependent claims.

According to an aspect of the present disclosure a method for simultaneous evaluation of items via an online service is provided, wherein an evaluation activity directed at a plurality of items is initiated for a group of users of the online service. Furthermore, a communication channel connecting the users of the group with each other is established and coupled to the evaluation activity. Each user of the group of users is provided with a representation of the evaluation activity, which is customized for this user, and one or more further representations of the evaluation activity, each customized for another user of the group. According to the method, an interaction of a user of the group with one of the representations provided to the user is detected, such as an interaction with the representation customized for the user or at least one of the further representations customized for the other users of the group, and the representations are updated in response to the interaction. Updates of the representations are simultaneously provided to at least some of the users of the group.

A plurality of users of the online service, such as two or more users, may therefore collaboratively evaluate items via the online service at the same time, while being interconnected with each other via respective representations of the evaluation activity and the linked communication channel that may, for example, enable a chat session between the users of the group.

Each user is provided with a representation of the evaluation activity that is directly customized for and targeted to the user, for example, based on his or her profile, in order to deliver specific customized data for the user. For example, according to the profile the user may be interested in certain items, and the method may preselect the plurality of items based on the respective interests of the user. Also, the user may configure the representations and/or items according to his or her preferences.

In addition, the user is also provided with at least one further representation of the evaluation activity that is, however, customized for another user of the group of users. Hence, the user may share and observe the current individualized performance of at least one other user, which participates in the evaluation activity.

The representation customized for the user and the further representations customized for another users may be presented to the user on a display of a client device or terminal operated by the user. A default view may, for example, show a graphical representation of the communication channel, including, for example, a chat window, and the representation customized for the user, including, for example, a panel related to the items and a recommended items box, which may provide a listing of all items that have been recommended by one of the users of the group. Furthermore, the default view may show the representations customized for the other users, including, for example, viewing "looking at" boxes that display what items these users are currently looking at. Each single element in each representation may be turned on and off by the respective user.

Any interaction of one of the users of the group of users with one of the provided representations will be directly processed and the respective updates of the representation as well as any other affected representation will be simultaneously provided to at least some of the users of the group. Accordingly, the users may utilize the representations, the communication channel, as well as both in combination to directly interact with each other, while observing the same evaluation activity, however, from different and customized perspectives.

The communication channel interlinks the users of the group and is directly linked to the evaluation activity. The communication channel may, for example, enable a connected chat, such as a text chat, an audio chat, and/or a video chat, which is attached to the evaluation activity or a module providing the evaluation activity, for example, a module providing a shopping site.

The computer-implemented method therefore allows a joint and collaborative online experience directed at evaluation of items available via the online service, for example, including virtual items or goods, real items or goods, and combinations thereof. For example, the evaluation activity may be directed at an online shopping experience presented on a website of the online service or an in-game 3D experience or virtual world. In real life, customers like to stroll through real shops together and to talk about what they find and see. Since conventional online shopping solutions are directed at isolated users, they fail to deliver such a collaborative shopping experience. In contrast, the method allows an online shopping experience, which is similar to shopping with friends in real shops but with the convenience of staying at home and shopping online.

According to one embodiment, the method further includes maintaining, for each user, a selection of the further representations, wherein only updates of the selected representations are simultaneously provided to the user. Initially, the user may be provided with further representations for every other user of the group of users. For example, the users of the group may be linked in pairs to each other according to a certain category, such as "friend," and/or "buddy." Accordingly, the user may receive the further representations of his friends or buddies of the group. Thereafter, the user may select one of the representations or some of the representations in order to simultaneously receive only updates of these selected representations. Thereby, the user may focus on the activities of the selected other users of the group. Also, computational complexity and network traffic may be reduced to enable a faster delivery of interesting data. In order to determine which users are to receive which updates of the representations, a mapping may be dynamically maintained for the group of users. The mapping may, for example, be represented and stored as a matrix, wherein each column and each row represents a target user and the selected representations, respectively. Similarly, the rows may represent the target users and the columns may represent the selected representations.

According to one embodiment, said detecting the interaction of a user with a representation includes receiving an indication of dropping, by the user, at least one of the plurality of items on the representation. For example, the interaction may be indicative of a recommendation of an item by the user. Hence, a user may track an item from anywhere on a page, which is provided by the online service to the user, such as a listing of the available items of the evaluation activity, or one of the representations provided to the user, into one of the representations customized for the other users in order to recommend the item to the other user. This interaction can be immediately detected and respective updates may be simultaneously provided to the target user and other users. Correspondingly, the recommended item may be immediately displayed in the representation customized for the target user, for example, within a recommended items box of the targeted user, for example, including a notification of which user dropped it there. From the recommended items box the targeted user may drag the item further to another area of the representation, such as a shopping cart, or a shopping view in order to further investigate the item. The targeted user may also double click, click on or touch the item in order to open and further investigate the recommended item and respective properties.

In one embodiment, the method further includes receiving a message from a user of the group via the communication channel, said message related to at least one of the plurality of items. This enables a default commenting on the items of the evaluation activity using the communication channel. The users may talk about or comment on the items by typing text while the respective item is in a viewing pane of one or more of the representations or by talking via microphone and pointing at the item of interest with a mouse cursor or another interaction means, such as by hovering the mouse over the item's icon in at least one of the representations. Accordingly, this highlighting may be visible for the other users of the evaluation activity via the simultaneous update. In addition, each message received via the communication channel from a user may be further analyzed and automatically linked to respective items of the representation customized for the user. This enables other users receiving the message to immediately identify the items of the message.

Further to the default commenting and the subsequent analysis of items associated with messages according to an embodiment, the method according to another embodiment further enables direct commenting on items. Correspondingly, said detecting the interaction of a user with a representation includes receiving an indication of dropping, by the user, an item from the representation on the communication channel. In order to comment on a particular item, the item or an icon representing the item may be dragged to and dropped into a graphical representation of the communication channel, such as a chat window. Dragging may be done from any area on a display provided to the user, such as a shopping window of the representation customized for the user, any other representation customized to another user, viewing "look at" boxes or a recommended items box and other areas of any representation. After dropping the item, the user may be requested to enter a suitable text message or record a voice or video message, which may be thereafter directly linked to the dropped item, and sent via the communication channel in combination with an indication of the dropped item, such as a unique identification (ID) of the dropped item.

According to one embodiment, another user of the online service may be invited to join the evaluation activity in response to the interaction. If the other user accepts the invitation, the invited user is added to the group of users. Accordingly, users of the online service may invite other users, which may be online or offline, to join an online evaluation activity, such as an online shopping tour. Offline users may receive a notification requesting them to go online and join the shopping tour. Online users may be either directly added to the group or may be requested to confirm the invitation.

In one embodiment, the method further includes an online selling of at least one of the items in response to the interaction. In particular, the evaluation activity may be part of a shopping experience. Accordingly, the representations provided to each user may, for example, include a shopping cart of the respective user. A user may focus on items, such as by adding the items to his or her shopping cart, and may, subsequently, purchase the items via the online service based on further interaction with other users of the group. Connected users of the group may, for example, share their shopping carts, forward recommendations, attach messages to forwarded items and/or to other users and the like.

Furthermore, a discount for one of the items may be offered to the group of users in response to said online selling, according to an embodiment. Connected users may get a discount for purchasing the same item simultaneously, for example, while participating in the same live shopping experience. An item on a screen of the user that has a discount attached to it may further include a "discount icon" that can be dragged into one of the representations, such as into the representation customized for the user to get the discount, or into one of the representations of the other users in order to recommend this item to the other users in combination with the discount. For example, the user may drag and drop the item linked to the discount into a shopping cart or a corresponding icon of the representation customized for the user, and may further recommend the item to other users. The discount may be updated in real-time depending on the amount of users of the group who committed to purchase the item. Furthermore, a user may get an extra discount or promotional bonus on that item if he or she is the one who initially recommended the item to the group and if the item has been actually purchased.

According to another aspect a computer-readable medium having instructions stored thereon is provided, wherein said instructions in response to execution by a computing device, cause said computing device to perform a method for simultaneous evaluation of items via an online service according to embodiments of the present disclosure. In particular, the computing device may host the online service or may be coupled to another computing device hosting the service, enabling users of the online service to connect via respective client devices or terminals to at least one server of the online service.

The computing device may be configured to initiate an evaluation activity directed at a plurality of items for a group of said users of the online service, to establish a communication channel connecting the users of the group with each other, wherein said communication channel is coupled to the evaluation activity, to provide each user of the group with a representation of the evaluation activity customized for the user and one or more further representations of the evaluation activity, each customized for another user of the group. In addition, the computing device detects an interaction of a user of the group with one of the representations provided to the user, updates the representations in response to the interaction, and simultaneously provides updates of the representations to at least some of the users of the group.

According to another aspect an online system hosting an online service is provided, wherein the online system comprises a service layer, a communication channel, and a processing component. The service layer includes an interface to an evaluation activity for a group of users of the online service, wherein the evaluation activity is directed at a plurality of items available via the online service. Furthermore, the service layer includes representations of the evaluation activity, wherein each representation is customized for another user of the group. The communication channel is coupled to the evaluation activity and connects the users of the group with each other. The processing component provides via the interface to each user of the group one of the representations customized for the user and one or more further representations of the evaluation activity, each customized for another user of the group. Furthermore, the processing component detects an interaction of a user of the group with one of the representations provided to the user, updates the representations in response to the interaction, and simultaneously provides via the interface updates of the representations to at least some of the users of the group.

In one embodiment, the online service is at least one of a social network, a gaming environment, and a cloud-based service. In particular, the online service hosted by the online system enables a plurality of users to connect with each other and to participate in said evaluation activity.

Embodiments of the online system may include the service layer, the communication channel, and/or the processing component, as well as further modules, components or structural features and variations thereof, which may be further configured to perform one or more method steps as defined in one of the embodiments of the method. Also, the instructions stored on a computer-readable medium according to embodiments may be directed at said one or more method steps as defined above.

### BRIEF DESCRIPTION OF THE DRAWINGS

The specific features, aspects and advantages of the present disclosure will be better understood with regard to the following description and accompanying drawings:
- Fig. 1: shows a flow chart of a computer-implemented method for simultaneous evaluation of items according to an embodiment;
- Fig. 2: shows an example of an interface provided to a user including various representations according to an embodiment;
- Fig. 3: shows another example of an interface provided to a user according to an embodiment;
- Fig. 4: shows an example of an interface provided to a user according to an embodiment; and
- Fig. 5: schematically depicts a system overview of an online system according to an embodiment.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

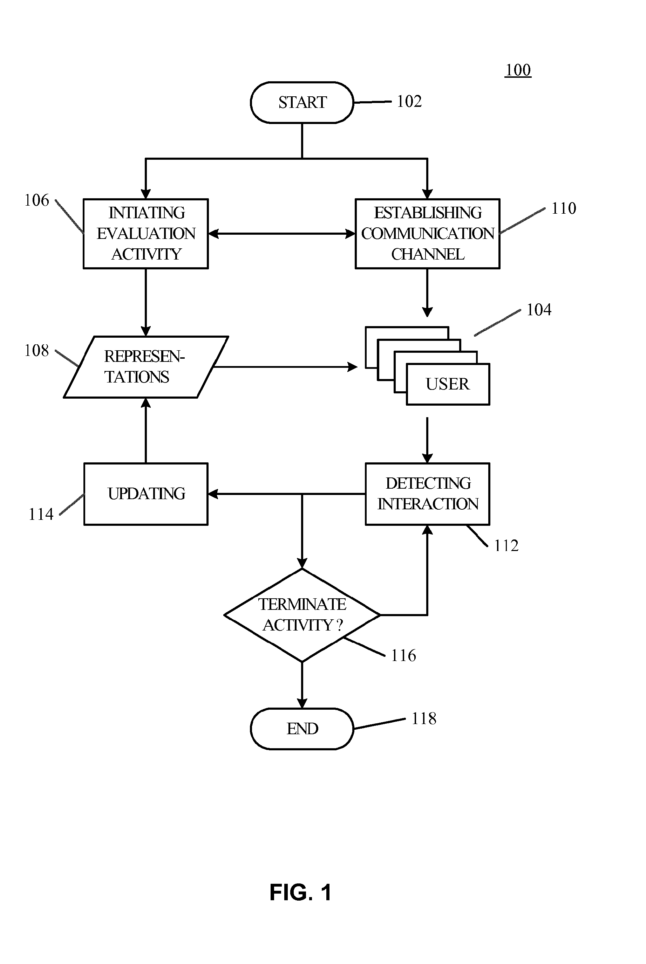

Fig. 1 depicts a flow chart of a method for simultaneous evaluation of items via an online service according to one embodiment. The method 100 may be enabled via an online service, such as a social network, a gaming environment, or a cloud-based service. In particular, the method 100 may be implemented by one or more processing systems, such as a server or a plurality of servers or any other computing or processing platform suitable for hosting the online service.

Online services, such as social networks, gaming environments, cloud-based services, as well as user networks, gaming networks, online platforms, online systems, communication and networking sites, and other systems and interfaces, which may be accessible via a network by a plurality of users operating client devices or other remote terminals, enable users to share online content within the online service and to participate in activities provided by the online service. For example, each user may be connected via a client device with at least one server hosting the online service. The respective server may provide the user with one or more interfaces that may be provided or displayed on the client device or terminal and allow the user to interact with the online service. For example, a server may generate a personalized page which may be rendered on the client device of the user. The user may apply any interaction technique available on his or her client device, such as mouse interaction, keyboard interaction, gesture recognition, or touch interfaces, and the interaction input may be transferred to the server where it may be further processed in order to initiate a certain action. Also, the input may be processed on the client device, in order to provide the server with commands or instructions on how to further proceed.

The method may be initiated in step 102. For example, the online service may be triggered by a first user to enable simultaneous evaluation of items. Thereafter, the online service or a respective computing component may add the first user and at least one second user to a group of users 104, wherein the second users may, for example, be invited by the first user to join the evaluation activity. If one second user accepts the invitation, the evaluation activity may be initiated in step 106.

The online service or a respective processing component may thereafter create representations 108 of the evaluation activity for each user of the group of users 104 and may provide to each user of the group 104 one of the representations 106, which may be directly customized for that user, as well as further representations of the evaluation activity, each of which may be customized for another user of the group 104. A representation may for example include one or more of a shopping panel, a shopping cart, a recommended items box, and a viewing "looking at" box that shows the items a particular user is looking at.

Further to the initiation of step 106, a communication channel for the users of the group 104 may be established in step 110. The communication channel may be coupled to the evaluation activity, as indicated by the arrows between blocks 106 and 110. In addition to the representations 108, each user of the group 104 may be provided with a graphical representation of the communication channel to enable a direct communication and interaction between the users of the group 104. The link between the evaluation activity and the communication channel may enable users to drop items of a particular representation onto the graphical representation of the communication channel in order to generate and transmit a message related to the dropped items to other users. Also, messages sent via the communication channel may be automatically linked to currently observed items of the representations.

The online service or a respective processing component may continuously observe interactions of the users, and may detect any interaction of one of the users of the group 104 with one of the representations provided to the respective user in step 112. In response to a detected interaction, the representations may be updated in step 114 and the updates of the representations may be simultaneously provided to at least some of the users of the group 104, preferably in real-time. In addition, the online service or a respective processing component may monitor the interactions for termination of the activity in step 116. For example, the first user that triggered the evaluation activity in step 102 may decide to terminate the evaluation activity by transmitting a respective command. Also, the evaluation activity may be automatically terminated if only one user or no users remain in the group of users 104 and no further users are invited to join the group.

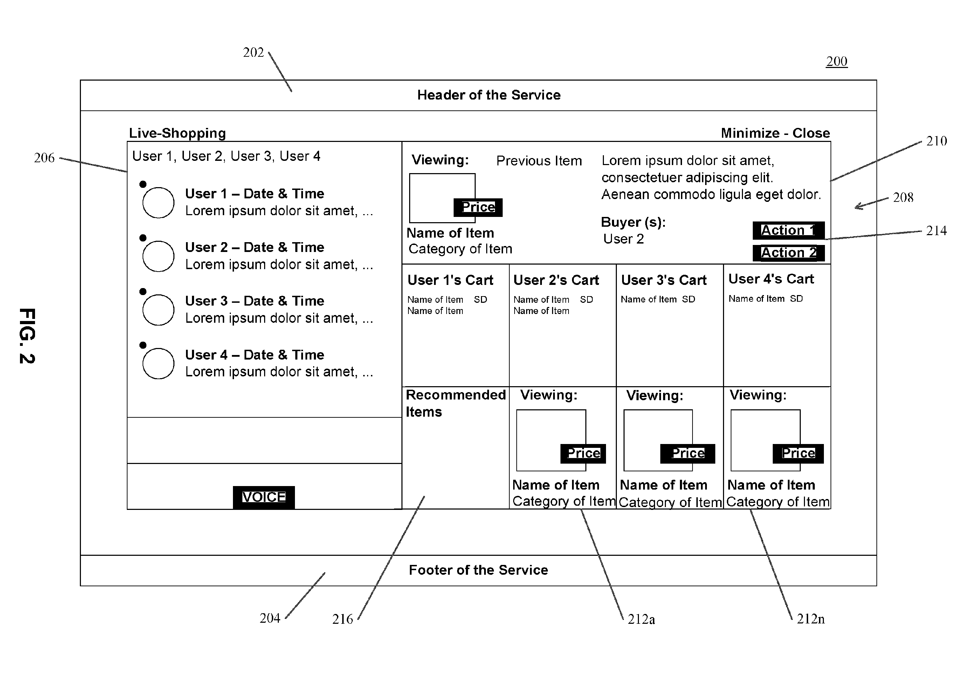

Fig. 2 shows an interface of an online service including representations of an evaluation activity according to one embodiment, such as a sample view of an online live shopping tour or shopping experience of four users denoted as "User 1", "User 2", "User 3", and "User 4". The interface 200 may be presented as a page or website of a social network or any other kind of online service and may be personalized for a particular user. The page may comprise a header 202 and a footer 204 providing information related to a service of the social network currently utilized by the user. Furthermore, the page may comprise information about the user and/or an identification, such as a user name or an image of the user, and various further services for the user, such as filters for content and others.

The page may include a first section 206, which may include a list of connected users, a chat window, and a text message window. The chat window may include a list of messages as posted by the connected users. The list may be sorted, for example, according to a time stamp of the message. The chat window may be configured to accept any text input and may further include an interaction element to trigger a voice recording device, such as a microphone in order to record and/or stream a voice input to any other connected user participating in the shopping experience. Similarly, the chat window may as well provide an interaction element that enables the user to initiate a video chat, for example, by triggering a video camera or other recording devices to record and/or stream a video representation of the user to the other users participating in the shopping experience.

A second section 208 of the page of interface 200 may represent the online live shopping experience and may include a representation 210 of the evaluation activity customized for the user, as well as further representations 212a, ..., 212n that are customized for other users participating in the shopping experience, which may form a shopping group. Representation 210 may include a shopping panel depicting items the user is currently looking at alongside with descriptions and pictures of the respective items. In addition, the user may be informed if items have any discount attached to them and whether any other users have already purchased any of these items. Furthermore, the user may be enabled to scroll back in time in order to view a history of previous items viewed by one of the users. Representation 210 may further include a navigation panel 214 that may enable the user to engage with one of the items, for example, in order to recommend an item to other users of the shopping group, to make a purchase of one of the items, and to initiate other suitable actions related to the items.

The further representations 212a, ..., 212n may each represent a shopping cart of one of the other users of the shopping group. Each shopping cart may include a listing of items which have previously been selected by the respective user and included into the shopping cart. A special icon (SD) may signal to the user viewing interface 200 a discount connected to the item.

If one of the users leaves the group or a new user joins the group, the tiling of the further representations 212a, ..., 212n may be dynamically adjusted and accommodated to the current number of users and the available area may be tiled accordingly, in order to display all shopping carts of all currently connected users of the group. Each of the representations 212a, ..., 212n may furthermore include a section, for example in a lower part of the representation, which may indicate items other users are currently looking at.

The second section 208 may, furthermore, include another section 216 indicating recommended items. Section 216 may be provided anywhere in the second section 208 or as a component of the representation 210 customized for the user. All items that are recommended to the user by other users of the group may be listed in section 216. Furthermore, the online service or a respective processing component may implicitly recommend items that were looked at or bought by other users of the group in section 216. Similar to the shopping carts in representations 212a, ..., 212n, a special icon, for example, indicated as SD, may signal to the user if the respective item has a special deal connected.

The interface 200 combines the representation of the evaluation activity customized to the user who is directly viewing the page as well as representations which are directed to other users of the group of users. All elements are updated in real time such that discount changes, changes in the state of goods or items, or any goods or items that appear the first time or that have been added, for example, to a shopping cart, as well as any other interactions of one of the users with one of the respective representations or items are immediately provided via the online service to the other users of the group in real time. This may be achieved by dedicating one or more processing components of the online service to the evaluation activity for any interactions and updates related to the evaluation activity. In addition, the processing component may also be directly coupled to the communication channel. The processing component may further use the resources of the communication channel and may as well analyze any messages provided via the communication channel in order to update respective elements and items of the evaluation activity.

According to another example, the interface 200 or a similar interface could also be presented within an in-game 3D experience or virtual world, where chosen items could be shared in real-time through one of the representations 212a, ..., 212n or through similar representations, such that each user may see what other users, for example, friend players, may choose as clothes or items. Each one of the representations 212a, ..., 212n and the representation 210 or similar representations may, for example, include a 3D character or avatar of the respective user, on which the clothes and items may be directly arranged if the user selects or interacts with the corresponding clothes or items. Thus, each 3D character may be a symbolic representation of a shopping cart. Correspondingly, the in-game evaluation activity may enable a group of players of a game to equip themselves with items, which they may require for further advancing in the game, through the shared representations and evaluation activity in real-time, and to discuss the respective clothes, goods, and items with each other.

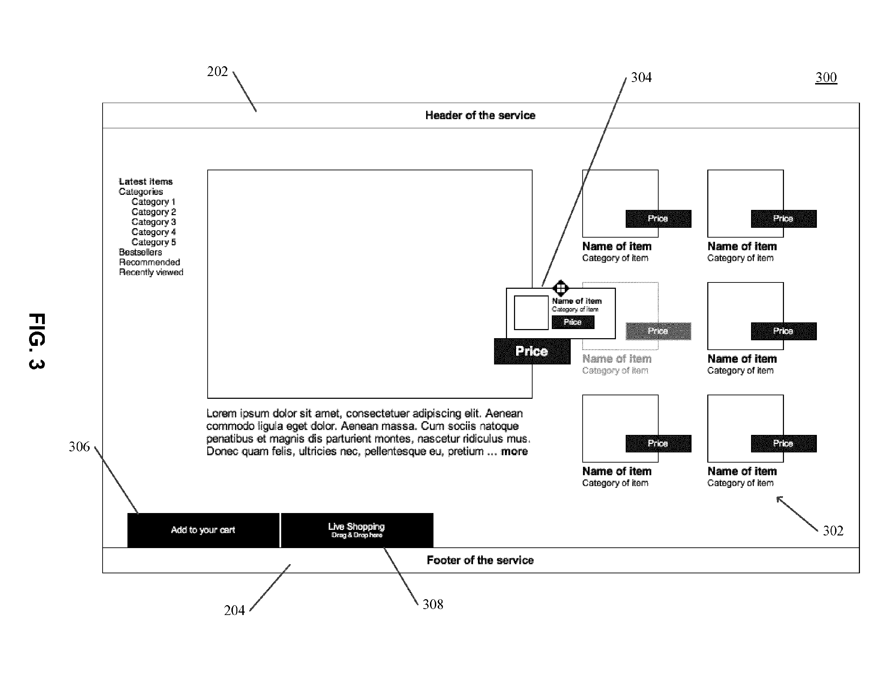

Fig. 3 shows another representation of an evaluation activity according to an example, provided as an interface of an online service enabling a simultaneous evaluation of items via the online service. The interface 300 may be similar to the interface 200 of Fig. 2. Therefore, same or similar parts of Fig. 3 have been designated with the same reference signs as in Fig. 2. The page may comprise a header 202 and a footer 204. The page may be requested by a user which may be part of a group of users participating in an evaluation activity, such as an online live shopping experience with other users via the online service. The user may interact with a listing of purchasable items 302 and may, for example, drag one of the items 304 using a suitable interaction technique, such as a mouse or a touch interface, in order to perform at least one action, which may directly and immediately affect other users of the group.

For example, the user may drag the item and drop it directly into his or her own shopping cart by dropping the item on interactive element 306. The online service may immediately detect the interaction, update respective representations of the evaluation activity and provide the update to the other users of the group, such that the added item 304 may immediately be visible to the other users participating in the live shopping experience through the respective representation displayed on their pages, such as the interface 200 of Fig. 2.

Furthermore, the user may drag and drop the item 304 into an existing live shopping activity, as represented by interactive element 308, which may trigger the online service to recommend the item to the other users of the group, for example, friends of the user, as a resulting action. If there is no live shopping activity initiated yet, the online service may create one. Hence, by utilizing the interactive element 308 the user is enabled to create a live shopping event or any other suitable evaluation activity. This evaluation activity may be represented by the online service as a real-time event and may enable users to interact with other connected users. The evaluation activity also enables users to discover other items connected users are interested in.

After dropping the item 304 onto the interactive element 308, the user may be notified about respective recommendations of items by other users and may also be invited to join the evaluation activity. For example, two users of a social network being connected or interlinked with each other, for example, as friends, may recommend items to each other, however, both users may not be involved in the evaluation activity yet. Hence, the online service may interpret at least one of the recommendations as an invitation to a live shopping activity, initiate the activity and add both users to the group linked to the activity.

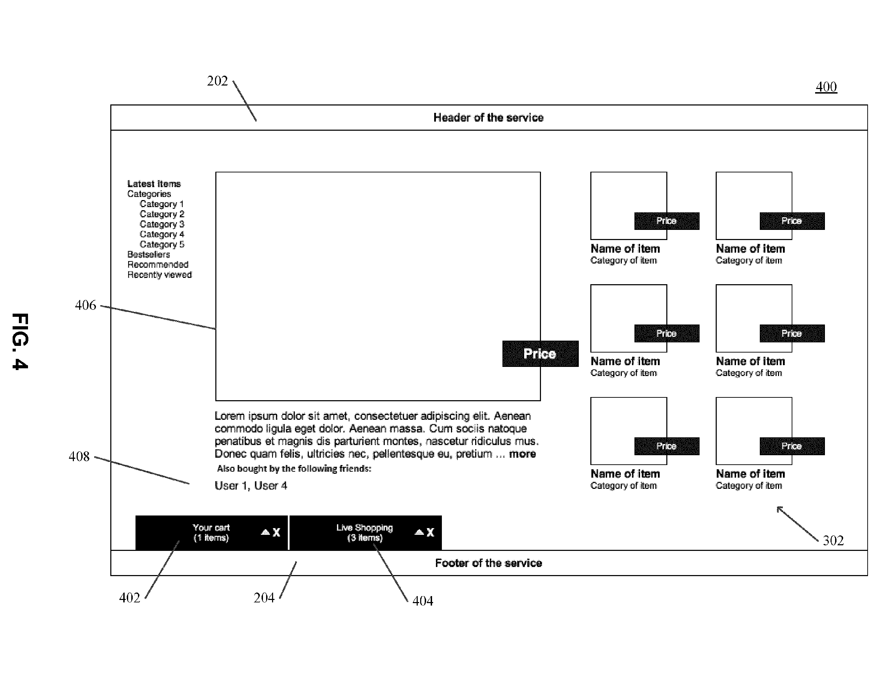

Fig. 4 shows an interface of an online service according to one embodiment. The interface 400 may be provided as a page of an online service, such as a social network, and may be similar to the interface 300 shown in Fig. 3. Therefore, same or similar parts have been denoted with same numerals as in Fig. 3. The page of interface 400 includes a header 202 and a footer 204 of a service that has been initiated by a present user viewing the interface 400. The interface 300 may include a listing of items 302 which are currently available for evaluation by the user, for example, during an online live shopping experience. In particular, the user may drop or move one of the items 302 into interactive element 402 or a corresponding interactive element, such as the interactive element 306 of Fig. 3, thereby including the dropped item into a shopping cart. The number of items in the shopping cart may, for example, be displayed within the interactive element 402.

Furthermore, the user may be currently connected with other users in a live shopping activity, as indicated by interactive element 404. In particular, the online service may notify the user that items have been added to the live shopping experience via the interactive element 404.

The online system may also notify all users simultaneously via respective representations and interactive elements that particular items, such as item 406, have been already bought or are currently selected by other users, for example "User 1" and "User 4" as indicated in section 408. All notifications are processed by the system in real-time and simultaneously during browsing and viewing of one of the items 302 or item 406. Accordingly, the current user viewing the interface 400 may always be informed about actions of other users of the group of users involved in the online evaluation activity.

The interactive elements 402 and 404 may enable the user to initiate further actions. For example, by triggering interactive element 402, the user may open a representation of the live shopping experience including further details about his or her shopping cart as, for example, illustrated in Fig. 2. Also, by triggering interactive element 404 the user may retrieve further information on the live shopping experience, for example, via the interface 200 of Fig. 2.

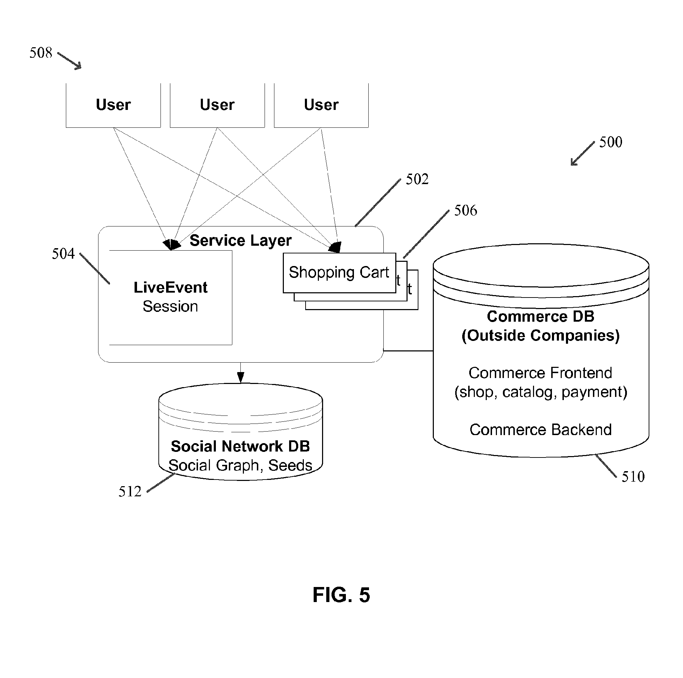

Fig. 5 schematically depicts a system overview enabling a simultaneous evaluation of items via an online service according to an embodiment. System 500 may include a service layer 502 which provides an interface to an evaluation activity. For example, the evaluation activity may be implemented as a live event session 504. The service layer may further maintain several representations of the live event session 504, for example by maintaining a plurality of shopping carts 506. A plurality of users 508 may access the service layer 502 of the system 500. Each user may operate a local or remote client device or terminal to initiate the connection to the server 500 via a network in order to access the evaluation activity represented by the live event session 504.

Hence, users 508 are connected to the live event session 504 persistently and also share access to their shopping cart 506. The live event session 504 may define data structures of the shopping carts 506 as well as further necessary elements. For example, the live event session 504 may be connected to a commerce database 510, which may include a front end of a commerce solution, such as a shop, a catalogue, a payment application, and others. In addition, the commerce database 510 may further include a commerce back end. The commerce database 510 may provide the live event session 504 with purchasable items and link the service layer 502 to a payment gateway.

In addition, the service layer 502 and the live event session 504 may access a social network database 512 that may include records of users 508. For example, the social network database 512 may include profiles and links between users 508 within the online service or social network, and further data related to the users 508. The social network database 512 may, for example, include a social graph. In addition, the social network database 512 may include representations of online content available via the social network. The online content, as well as the records of the users 508 may be stored within container data structures, also called seeds, which may be used to represent content data throughout the online service in a way, which enables a unified management and handling of the content data.

Each seed may store the respective content, such as a blog, a video file, live real-time content, other media data, a user or a group of users, or other objects. Correspondingly, all kinds of online content may be handled in the same container data structure or seed. Furthermore, each seed may stores basic parameters or meta data and additional parameters or meta data. A seed may be persistent in time and may grow in size.

The meta data attached to each seed may define who is allowed to interact with the seed, what the seed is allowed to do, who created the seed, and other information for handling and interacting. A respective management system may, therefore, analyze the meta data in order to determine suitable actions for the seed, which may be automatically provided to users of the online system in conjunction with the seed.

Basic parameters or meta data of a seed may include at least one of a unique ID, an identification of a user, who created the seed, as well as a list of recipients that may be other seeds addressed by the seed, such as a single recipient seed or a group of recipient seeds, an indication of the type of the seed, as well as an indication of actions which are assigned to the seed, such as social or content-based actions, and combinations thereof. Further basic parameters may include an identification of an owner, which may be the current user managing the seed, link and connect permissions, a status of the seed within the online system, a future date, which may define when the seed will be visible online, an expiration date, other suitable information, and combinations thereof.

A seed can be related to other seeds, such as parent, child, and neighbour seeds or other hierarchically or technically organized relationship structures. Seeds may be coupled to each other within the online service via links, connections and/or shares. For example, if a user links to a seed, the user may establish a passive, asymmetrical link to the seed. The user will be notified about any changes and/or updates of the linked seed. A connection to a seed establishes a symmetrical connection to the seed, where both seeds, the seed representing the user connecting and the seed being connected, are aware of the connection. Furthermore, a user can define that a seed is to be shared with certain target seeds representing, for example, other individual users or a group of users. For example, a user may desire to share the content of his/her seed with a certain group of other users of the online system. In addition, seeds may be coupled across one or more online systems, servers and clouds using one or more seed servers, which may be provided by different seed-server operators.

Each seed may explicitly allow particular users to perform certain actions as defined by the basic parameters, for example, content actions directed at a use of the seed content, and social actions directed at an initiation of social interactions with the seed. Hence, an element representing an offer according to an embodiment may, for example, be created as a seed which may be stored and managed by a corresponding online system and which may enable users to interact with the element.

Correspondingly, the social network database 512 may handle all requests of the service layer 502 directed at social interactions and other aspects of the social network using the social graph, interlinking all online content and user data stored as seeds.

All components of the online system 500, the service layer 502, the commerce database 510, and the social network database 512 may be implemented on a single processing component. Also, at least one of the components or each component may be realized on a single processing component, which may be distributed within a network or cluster of processing components and interconnected, for example, via a network or an interconnect. Correspondingly, the service layer 502 may be realized on a first processing resource and may access a centralized commerce database 510, as well as a centralized social network database 512 within the online service.

The method 100 as described with reference to Fig. 1 as well as the system 500 as described with reference to Fig. 5 may be applied to enable a plurality of use cases enabling a plurality of live shopping experiences within a social network.

According to one use case, a first user may shop online and invite one of his friends within a social network to join a shopping experience. In particular, the first user, such as user A, may be online in the social network and may look for certain items to buy. During browsing of the content of the social network, for example by investigating a listing of items, such as the listing 302 of Figures 3 and 4, user A may find an item suitable for another user, which may be connected to user A within the social network as a "friend". For example, user A may find a computer mouse that he or she knows that their friend would be interested in buying. Correspondingly, user A may invite his or her friend, who may also be a user of the same social network and who may also be currently online, to join the shopping experience. User A may send the found item from the list of items or from any kind of online shop available via the social network to his or her friend and may further append an invitation to join the shopping experience.

The friend may get the invitation and may accept it. The friend may be added by the social network to the live-shopping group together with user A and the social network may deliver to user A and his or her friend the respective representations of the live-shopping experience and a dedicated communication channel, for example, including two shopping carts and a chat windows. While user A has already added a different item to his or her shopping cart, for example, a PC graphics card, the recommended computer mouse may also be added to his or her friend's shopping cart as a recommendation. The friend may now further see the recommended item in his or her shopping cart together with a text informing the friend that user A sent the recommendation.

Both users may now start chatting and the friend may examine the offer for the computer mouse and may see that each user of an online shopping experience may, for example, get an SD card for free if two or more users buy the respective recommended mouse. The friend may now drag the mouse from his or her shopping cart into a "purchase" box, and may also drag the mouse into a recommended items box of user A. As soon as user A also moves the item representing the mouse in his or her "purchase" box, the SD card will be automatically added as a free item to the shopping carts of both users.

According to another use case, three friends, such as users A, B and C, may shop together and exchange information about items found within a social network. They may share the same main chat window and may see each others' representation of an online shopping experience, including their shopping carts, recommended items boxes and also viewing "looking at" boxes of each other user.

While each user may be sitting at home or elsewhere with his or her client device or terminal, for example, a PC or a portable or mobile device, they may see via their viewing "looking at" boxes what the other users in the shopping group are currently examining or looking at. It may also be possible to scroll back in time through a main shopping panel in order to view a history of previous items, which have been viewed by the users. Any item listed in the shopping cart, recommended items box and/or viewing "looking at" box may be dragged by one of the users to a recommended items box of another user or to their own shopping cart or into their own viewing "looking at" box. Any of these interactions are automatically processed by the social network and provided to the other users in real time. Thus by dropping one of the items, this interaction will automatically open this item in a shopping window as well as within the representations provided to the users.

The shopping activities and interactions are linked to a communication dedicated to the users of the shopping group using, for example, a chat channel. Messages exchanged via the dedicated communication means may be directly linked to one or more of the items. For example, any text, voice and/or video message entered in or provided at a respective chat window by one of the users may be automatically attached to the current "looked at" item of that user. In this way users of a shopping group may engage in a shopping tour with their friends, but need not to be physically located together in order to interactively and collaboratively participate in the shopping tour.

While some embodiments have been described in detail, it is to be understood that aspects of the disclosure can take many forms. In particular, method steps described with regard to method 100 of Figure 1 may be executed in sequence or concurrently by a processing resource. Also, not every processing step may be necessary for each embodiment. For example, steps 102 and 106 of the method 100 as shown in Fig. 1 may be combined in a single step. Furthermore, the initiation of the evaluation activity according to step 106 and the establishment of the communication channel according to step 110 as shown in Fig. 1 may be executed in parallel. Likewise, the initiation of the evaluation activity may be executed and the representations may be prepared within an online system and subsequently the communication channel may be established in order to directly provide the representations of the evaluation activity and representation of the communication channel to the users without delay.

Similarly, Figures 2 to 4 show interfaces presented to a user of an online service. It is to be understood, that the respective sections, listings and interactive elements of the interfaces may be arranged in a different order, for example, according to a screen orientation or resolution of a client device operated by the user. Furthermore, the respective elements may be arranged according to an interaction technique utilized on the client device of the user, such as a touch interface or a mouse-driven interaction. Also, it is to be understood that the disclosure is not limited to a particular number of users joined in the group of users. A maximum number of users may, for example, be only limited and/or pre-set by the online service based on available processing resources, an actual screen size, or by settings of the user initiating the evaluation activity.

While some embodiments have been described in detail it is to be understood that the aspect of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A method for simultaneous evaluation of items via an online service, comprising the steps of:
initiating (106) an evaluation activity for a group of users (104) of the online service,
said evaluation activity directed at a plurality of items;
establishing (110) a communication channel connecting the users of the group (104) with each other, said communication channel being coupled to the evaluation activity;
providing to each user of the group (104) a representation of the evaluation activity customized for the user and one or more further representations of the evaluation activity, each customized for another user of the group (104);
detecting (112) an interaction of a user of the group (104) with a representation provided to the user;
updating (114) the representations (108) in response to the interaction; and
simultaneously providing updates of the representations (108) to at least some of the users of the group (104).

2. The method of claim 1, further including maintaining, for each user, a selection of the further representations, wherein only updates of the selected representations are simultaneously provided to the user.

3. The method of claim 1 or 2, wherein said detecting the interaction of a user with a representation includes receiving an indication of dropping, by the user, at least one of the plurality of items on the representation.

4. The method according to one of the preceding claims, wherein the interaction is indicative of a recommendation of an item by the user.

5. The method according to one of the preceding claims, wherein the steps of updating and simultaneously providing are performed in real time.

6. The method according to one of the preceding claims, further including receiving a message from a user of the group via the communication channel, said message related to at least one of the plurality of items, preferably further including, for each user, linking the message to the respective items of the representation customized for the user.

7. The method according to one of the preceding claims, wherein said detecting (112) the interaction of a user with a representation includes receiving an indication of dropping, by the user, an item from the representation on the communication channel.

8. The method according to one of the preceding claims, further including enabling a chat session between users of the group via the communication channel, and/or inviting another user of the online service to join the evaluation activity in response to the interaction, and adding the invited user to the group of users in response to accepting the invitation by the invited user.

9. The method according to one of the preceding claims, further including online selling at least one of the items in response to the interaction, preferably further including offering a discount for one of the items to the group of users in response to said online selling.

10. The method according to one of the preceding claims, wherein the items are available via the online service, including at least one of a virtual item, a real item, and a combination thereof, and/or wherein the online service is at least one of a social network, and a gaming environment.

11. A computer-readable medium having instructions stored thereon, wherein said instructions, in response to execution by a computing device, cause said computing device to perform a method according to one of the preceding claims.

12. An online system hosting an online service, comprising:
a service layer (502) including an interface (504) to an evaluation activity for a group of users (508) of the online service, said evaluation activity being directed at a plurality of items available via the online service, and representations (506) of the evaluation activity, each customized for a user of the group (508);
a communication channel coupled to the evaluation activity, said communication channel to connect the users of the group (508) with each other; and
a processing component to provide via the interface (504) to each user of the group (508) the representation customized for the user and one or more further representations of the evaluation activity, each customized for another user of the group, to detect an interaction of a user of the group with one of the representations (506) provided to the user, to update the representations (506) in response to the interaction, and to simultaneously provide via the interface (504) updates of the representations (506) to at least some of the users of the group (508).

13. The system of claim 12, wherein the processing component is further configured to receive a message from a user of the group (508) of users via the communication channel, said message related to at least one of the plurality of items, and, for each user, to link the message to the related items of the representation customized for the user.

14. The system of claim 12 or 13, further comprising storage means (512) to store a social graph of the users of the online service, and/or means for online selling at least one of the items in response to the interaction, and offering a discount for one of the items to the group of users.

15. The system according to one of the claims 12 to 14, wherein the online service is at least one of a social network, and a gaming environment.
